# EUROPÄISCHE PATENTSCHRIFT

(11) **EP 0 688 526 B1**
(45) Veröffentlichungstag und Bekanntmachung des Hinweises auf die Patenterteilung: **25.08.1999**
(21) Anmeldenummer: 95109759.1
(22) Anmeldetag: 23.06.1995
(51) Int. Cl.: A47J 36/02, A47J 27/00

(54) **Topfförmiges Gar- und/oder Kochgerät**
Cooking vessel in form of a pot
Récipient de cuisson en forme d'un pot

(30) Priorität: 24.06.1994 DE 4421904
(43) Veröffentlichungstag der Anmeldung: 27.12.1995
(73) Patentinhaber: VESTA AG & Co. oHG, D-55743 Idar-Oberstein (DE)
(72) Erfinder: Fissler, Harald, Dipl.-Ing., D-55743 Idar-Oberstein (DE)
(74) Vertreter: Honke, Manfred, Dr.-Ing.

(56) Entgegenhaltungen:
- EP-A- 0 111 867
- EP-A- 0 525 453
- EP-A- 0 534 202
- WO-A-91/15142
- WO-A-94/01030
- AT-B- 372 268
- FR-A- 2 689 748

## Beschreibung

Die Erfindung betrifft ein topfförmiges Gar- und/oder Kochgerät, welches für eine bodenseitige Zuführung von Wärmeenergie durch Wärmeleitung oder elektromagnetische Induktion eingerichtet ist, - mit einem im Grundriß runden Aufnahmebehälter für das Gar- und/oder Kochgut mit Behältermantel und Behälterboden aus austenitischem Stahlblech, einer bodenseitig angeschlossenen Platine aus einem gut leitenden metallischen Werkstoff, z. B. aus einer Aluminium- oder Kupferlegierung, und einer metallischen Platinenabdeckung. - Gar- und/oder Kochgeräte, welche wie vorstehend beschrieben eingerichtet sind, werden auch als Allherdgargeräte bzw. Allherdkochgeräte bezeichnet. Sie sind insbesondere für Haushalte bestimmt.

Gar- und/oder Kochgeräte, welche für eine bodenseitige Zuführung der Wärmeenergie durch Wärmeleitung eingerichtet und in der Praxis bewährt sind, sind mit einer Platine aus einer Aluminiumlegierung oder einer Kupferlegierung ausgerüstet und besitzen eine Platinenabdeckung aus einem Stahlblech aus einer geeigneten austenitischen Stahllegierung. Diese Werkstoffauswahl ist getroffen worden, weil austenitische Stähle nicht rosten. Austenitische Stähle sind jedoch nicht ferromagnetisch. Daraus resultieren Nachteile, wenn die Wärmeenergie über elektromagnetische Induktion zugeführt wird. Die Platinenabdeckung erfährt lediglich eine ohmsche Erwärmung. Demgegenüber nimmt ein ferromagnetischer Werkstoff durch elektromagnetische Induktion mit erheblich höherer Leistung Wärmeenergie auf, weil die sogenannten Hystereseverluste sich in Wärmeenergie umsetzen. Die übertragene, in Wärmeenergie umsetzbare elektromagnetische Leistung ist bei den vorbeschriebenen Ausführungsformen von topfförmigen Gar- und/oder Kochgeräten verbesserungsfähig.

Um bei den beschriebenen Gar- und/oder Kochgeräten des beschriebenen Aufbaus die Zufuhr der Wärmeenergie über elektromagnetische Induktion zu verbessern, ist es bekannt, mit ferromagnetischen Platinen zu arbeiten (DE 86 30 656 U). Die ferromagnetische Platine ist mit einer austenitischen Platinenabdeckung versehen oder liegt mit ihrem Platinenboden frei. Liegt sie frei, so können unter Umständen Korrosionserscheinungen auftreten, wenngleich der ferromagnetische Werkstoff regelmäßig möglichst korrosionsresistent ausgewählt wird. Ist die Platine mit einer austenitischen Platinenabdeckung versehen, so stört diese die elektromagnetische Induktion in bezug auf die übertragene Leistung.

In der Praxis ist es bekannt, bei einem Gar- und/oder Kochgerät des eingangs beschriebenen Aufbaus eine aus ferromagnetischem Werkstoff bestehende Platinenabdeckung im Abdeckboden mit Perforierungen zu versehen, in die der Platinenwerkstoff eintritt.

Bei dem bekannten Gar- und/oder Kochgerät, von dem die Erfindung ausgeht DE-A-44 12 944 besitzt die Platinenabdeckung einen kreisscheibenförmigen Abdeckboden mit einer Mehrzahl von über den Umfang verteilten Abdeckbodenausnehmungen. In die Abdeckbodenausnehmungen sind Abdeckbodenfüllstücke eingepaßt. Bei diesen Gar- und/oder Kochgeräten besteht die Platinenabdeckung mit dem Abdeckboden vorzugsweise aus austenitischem Stahlblech, während die Abdeckbodenfüllstücke aus ferromagnetischem Stahlblech bestehen. Diese Ausführungsform hat sich in bezug auf die Leistungsaufnahme durch elektromagnetische Induktion besonders bewährt. Man kommt aber auch dann zu guten Ergebnissen, wenn umgekehrt die Platinenabdeckung aus ferromagnetischem Werkstoff besteht und die Abdeckbodenfüllstücke aus austenitischem Stahlblech gebildet sind. Der Abdeckboden und die Abdeckbodenfüllstücke sind metallisch mit der Platine und diese ist mit dem Behälterboden verbunden. Zumeist ist die metallische Verbindung eine intermetallische Verbindung, die durch Preßschweißen hergestellt ist. Diese Ausführungsform weist eine lange Standzeit auf. Die insoweit bekannten Maßnahmen sind charakteristische Maßnahmen eines Gar- und/oder Kochgerätes, welches sich durch hohe Leistungsaufnahme in bezug auf die Einleitung der Wärmeenergie durch elektromagnetische Induktion auszeichnet, aber auch für die Zuführung von Wärmeenergie durch Wärmeleitung, z. B. durch Aufstellen auf eine Kochplatte, wohlgeeignet ist. Diese Gar- und Kochgeräte haben sich in funktioneller Hinsicht bewährt. Da der Werkstoff, aus dem die Abdeckbodenfüllstücke hergestellt werden, eine beachtlich andere Wärmedehnung aufweisen als der Werkstoff, aus dem die Platinenabdeckung hergestellt ist, können im Bereich des Passungsspaltes zwischen Abdeckbodenausnehmungen und Abdeckbodenfüllstücken Störungen auftreten, beispielsweise wärmedehnungsbedingte Veränderungen der Spaltweite. Im übrigen ist die Fertigung aufwendig, wenn die Abdeckbodenfüllstücke, insbesondere bei Herstellung der metallischen Verbindung zwischen dem Abdeckboden und den Abdeckbodenfüllstücken sowie der Platine durch Preßschweißen, in den Abdeckbodenausnehmungen freiliegen.

Der Erfindung liegt das technische Problem zugrunde, ein topfförmiges Gar- und/oder Kochgerät, das im Bereich des Passungsspaltes zwischen Abdeckbodenausnehmungen und Abdeckbodenfüllstücken Störungen sich nicht mehr einstellen, - und die Fertigung zu vereinfachen.

Zur Lösung dieses technischen Problems ist Gegenstand der Erfindung ein topfförmiges Gar- und/oder Kochgerät, welches für eine bodenseitige Zuführung von Wärmeenergie durch Wärmeleitung oder elektromagnetische Induktion eingerichtet ist, - mit einem im Grundriß runden Aufnahmebehälter für das Gar- oder Kochgerät mit Behältermantel und Behälterboden aus austenitischem Stahlblech, einer bodenseitig angeschlossenen Platine aus einem gut wärmeleitenden metallischen Werkstoff und einer metallischen Platinenabdeckung, bei welchem Gar- und/oder Kochgerät die folgenden Merkmale verwirklicht sind:
1.1) Die Platinenabdeckung besitzt einen kreisscheibenförmigen Abdeckboden mit einer Mehrzahl von über den Umfang verteilten Abdeckbodenausnehmungen,
1.2) in die Abdeckbodenausnehmungen sind Abdeckbodenfüllstücke aus Stahlblech mit Passungsspalt eingepaßt,
1.3) der Passungsspalt ist durch eine Laserstrahlschweißnaht geschlossen,
wobei der Abdeckboden und die Abdeckbodenfüllstücke auch im Bereich der Laserstrahlschweißnaht metallisch mit der Platine und diese mit dem Behälterboden verbunden sind. Die metallische Verbindung ist im Rahmen der Erfindung vorzugsweise eine intermetallische Verbindung, man kann sie aber auch als Lötverbindung ausführen.

Bei einem erfindungsgemäßen topfförmigen Gar- und/oder Kochgerät kann die Laserstrahlschweißnaht hauptsächlich aus dem Werkstoff der Platinenabdeckung gebildet sein. Die Laserstrahlschweißnaht kann aber auch aus dem Werkstoff der Abdeckbodenfüllstücke gebildet sein. Außerdem läßt sich die Laserstrahlschweißnaht so ausbilden, daß sie sowohl aus dem Werkstoff der Platinenabdeckung als auch aus dem Werkstoff der Abdeckbodenfüllstücke aufgebaut ist, Werkstoffverhältnis 1:1. Endlich kann die Laserstrahlschweißnaht aus einem zugeführten Schweißwerkstoff gebildet sein.

Die Erfindung geht von der Erkenntnis aus, daß in der modernen Fertigungstechnik die Abdeckbodenausnehmungen sowie die Abdeckbodenfüllstücke mit sehr engen Toleranzen sehr paßgenau gefertigt werden können, und folglich die Möglichkeit besteht, den Passungsspalt durch eine Laserstrahlschweißnaht zu schließen. Dadurch bildet die Kapselabdeckung, die insgesamt einerseits aus austenitischem Stahlblech und andererseits aus ferromagnetischem Stahlblech besteht, in mechanischer und in statischer Hinsicht eine Einheit, die als solche mit dem Behälter metallisch verbunden werden kann, insbesondere durch eine Preßschweißung mit intermetallischer Verbindung an den Behälter angeschlossen werden kann. Aber auch in bezug auf Wärmedehnungen und wärmedehnungsbedingte Verformungen verhält sich der Kapselabdeckungsboden eines erfindungsgemäßen Gar- und/oder Kochgerätes wie eine Einheit. Ist die Auslegung so getroffen, daß der Kapselabdeckungsboden zur Induktionsspule hin bzw. zu einer Aufstellplatte hin leicht konkav ist, und verformt sich dieser konkave Kapselabdeckungsboden bei der Erwärmung bis in den ebenen Bereich hinein, so verhält sich der Kapselabdeckungsboden mit seinen Abdeckbodenausnehmungen und den Abdeckbodenfüllstücken gleichsam wie eine Membran, ohne daß sich im Bereich der Passungsspalte Unebenheiten und/oder stufenförmige Verformungen ausbilden. Dieses Verhalten ist aus Gründen eines guten Wärmeübergangs durch Wärmeleitung von großer Bedeutung. Die dazu erforderliche Auslegung ist durch Einstellung der Größe der Abdeckbodenausnehmungen und damit der Abdeckbodenfüllstücke sowie durch Auswahl geeigneter Blechdicken leicht erreichbar.

Bei der Herstellung von Gar- und/oder Kochgeräten, die nach der Lehre der Erfindung gestaltet und ausgelegt sind, kann die Laserstrahlschweißung ohne Schwierigkeiten weitgehend automatisch durchgeführt werden, und zwar unter Verwendung der Nahtstelle zwischen den Abdeckbodenausnehmungen und den Abdeckbodenfüllstücken als Führungsspur für den Laserschweißkopf. Die erfindungsgemäßen Gar- und/oder Kochgeräte eignen sich daher insbesondere für eine industrielle Serienfertigung der Gar- und/oder Kochgeräte.

Gegenstand der Erfindung sind auch Verfahren zur Herstellung eines topfförmigen Gar- und/oder Kochgerätes des vorstehend beschriebenen Aufbaus.

Ein Verfahren zur Herstellung eines solchen topfförmigen Gar- und/oder Kochgerätes ist gekennzeichnet durch die Merkmale:
in den Abdeckboden der Platinenabdeckung werden die Abdeckbodenausnehmungen eingebracht,
aus Stahlblech werden die Abdeckbodenfüllstücke mit vorgegebener Passung ausgeschnitten,
die Abdeckbodenfüllstücke werden in die Abdeckbodenausnehmung mit einem vorgegebenen Passungsspalt eingepaßt, im kalten Zustand (Umgebungstemperatur) des Abdeckbodens und der Abdeckbodenfüllstücke werden die Laserstrahlschweißnähte hergestellt, und zwar mit einem focussierenden Laserstrahl ausreichender Energie,
wobei der Laserstrahl rechnergestützt geführt wird und eine Breite aufweist, die größer ist als die Spaltdicke des Passungsspaltes.

Ein weiteres Verfahren der Herstellung der beschriebenen Gar- und/oder Kochgeräte ist gekennzeichnet durch die Verfahrensschritte:
in den Abdeckboden der Platinenabdeckung werden die Abdeckbodenausnehmungen angebracht,
aus Stahlblech werden die Abdeckbodenfüllstücke mit vorgegebener Passung ausgeschnitten,
die Abdeckbodenfüllstücke werden in die Abdeckbodenausnehmungen mit vorgegebenem Passungsspalt eingepaßt,
die eingepaßten Abdeckbodenfüllstücke werden durch Bestrahlung erwärmt und durch Wärmedehnung wird ein Anpreßzustand erzeugt, bei dem die Schnittflächen der Abdeckbodenfüllstücke und die Schnittflächen der Abdeckbodenausnehmungen gegeneinander gepreßt werden,
die Laserstrahlschweißnähte werden im Anpreßzustand hergestellt, wobei der Laserstrahl rechnergestützt geführt wird.

Ein weiteres Verfahren zur Herstellung der beschriebenen Gar- und/oder Kochgeräte ist durch die folgenden Merkmale gekennzeichnet:
In den Abdeckboden der Platinenabdeckung werden die Abdeckbodenausnehmungen mit konischem Schnittrand eingebracht,
aus Stahlblech werden die Abdeckbodenfüllstücke mit vorgegebener Passung und zu dem Schnittrand der Abdeckbodenausnehmungen komplementärkonischen Schnittrand ausgeschnitten,
die Abdeckbodenfüllstücke werden in die Abdeckbodenausnehmungen Konusfläche gegen Konusfläche mit Konusüberlappung eingesetzt, wobei die Konuswinkel so gewählt sind, daß im eingesetzten Zustand der Abdeckbodenfüllstücke ein freier Laserstrahldurchfall blockiert ist,
im kalten Zustand (Umgebungstemperatur) des Abdeckbodens und der Abdeckbodenfüllstücke werden die Laserstrahlschweißnähte hergestellt, und zwar mit einem focussierten Laserstrahl, der auf den Bereich der Konusüberlappung gerichtet wird,
wobei der Laserstrahl rechnergestützt geführt wird.

Im Rahmen der Erfindung liegt es, daß letztbeschriebene Verfahren so zu führen, daß bei der Herstellung der Laserschweißnaht die Konusflächen in der Konusüberlappung aufeinandergepreßt werden.

Bei einer bevorzugten Ausführungsform der erfindungsgemäßen Verfahren werden die Abdeckbodenausnehmungen und die Abdeckbodenfüllstücke mit den Hilfsmitteln des Laserstrahlschneidens aus dem Stahlblech der Platinenabdeckung bzw. aus dem Stahlblech für die Abdeckbodenfüllstücke rechnergestützt ausgeschnitten. Die moderne rechnergestützte Laserstrahlschweißtechnik erlaubt es, das Ausschneiden so zu führen, daß toleranzarm mit extrem engen Passungen gearbeitet werden kann. Auf diese Weise läßt sich der Passungsspalt so einstellen, daß der Laserstrahl für die Laserstrahlschweißung nicht schweißunwirksam hindurchfallen kann. Bewährt hat es sich, mit ND- und/oder DO₂-Lasern zu arbeiten, sowie für die Platinenabdeckung sowie für die Abdeckbodenfüllstücke Bleche einer Blechdicke von 0,5 bis 0,8 mm zu verwenden.

Im folgenden wird die Erfindung anhand einer lediglich ein Ausführungsbeispiel darstellenden Zeichnung ausführlicher erläutert. Es zeigen in schematischer Darstellung
- **Fig. 1**: einen Vertikalschnitt durch ein erfindungsgemäßes Gar- und/oder Kochgerät,
- **Fig. 2**: eine Draufsicht auf den Abdeckboden des Gegenstandes der Fig. 1 von unten,
- **Fig. 3**: entsprechend der Fig. 2 eine andere Ausführungsform eines erfindungsgemäßen Gar- und/oder Kochgerätes,
- **Fig. 4**: entsprechend der Fig. 3 eine weitere Ausführungsform eines erfindungsgemäßen Gar- und/oder Kochgerätes und
- **Fig. 5**: mit den Teilfiguren a), b), c) und d) einen Ausschnitt A-A aus den Fig. 2 bis 4.

Das in den Figuren dargestellte topfförmige Gar- und/oder Kochgerät 1 ist für eine bodenseitige Zuführung von Wärmeenergie durch Wärmeleitung oder durch elektromagnetische Induktion eingerichtet. Es besitzt einen im Grundriß runden Aufnahmebehälter 2 für das Gar- und/oder Kochgut mit Behältermantel 3 und Behälterboden 4 aus austenitischem Stahlblech, eine bodenseitig angeschlossene Platine 5 aus einem gut leitenden metallischen Werkstoff, z. B. aus einer Aluminium- oder Kupferlegierung, und eine metallische Platinenabdeckung 6.

Die Platinenabdeckung 6 besitzt einen kreisscheibenförmigen Abdeckboden 7 mit einer Mehrzahl von über den Umfang und/oder den Radius verteilten Abdeckbodenausnehmungen 8. In die Abdeckbodenausnehmungen 8 sind Abdeckbodenfüllstücke 9 eingepaßt. Die Anordnung mag so getroffen sein, daß der Abdeckboden 7 aus austenitischem Stahlblech und Abdeckbodenfüllstücken 9 aus ferromagnetischem Stahlblech besteht, wobei der Abdeckboden 7 und die Abdeckbodenfüllstücke 9 metallisch mit der Platine 5 und diese mit dem Behälterboden 4 metallisch verbunden sind. Es kann aber auch die Anordnung so getroffen sein, daß der Abdeckboden 7 aus ferromagnetischem Stahl besteht und die Abdeckbodenfüllstücke 9 aus austenitischem Stahlblech bestehen. Auch hier sind der Abdeckboden 7 und die Abdeckbodenfüllstücke 9 metallisch mit der Platine 5 und diese mit dem Behälterboden 4 metallisch verbunden sind.

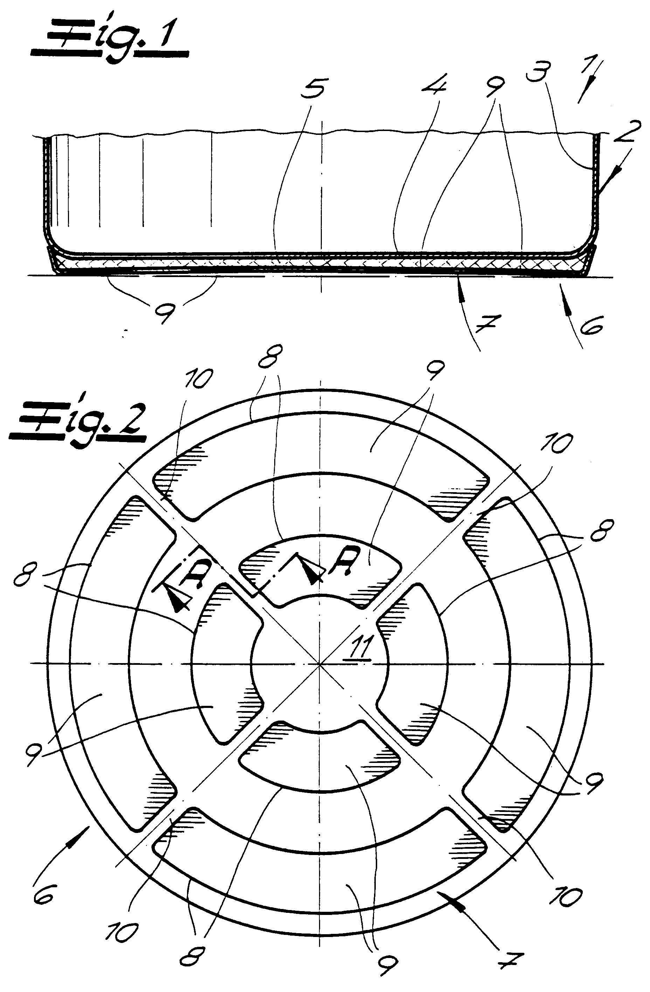

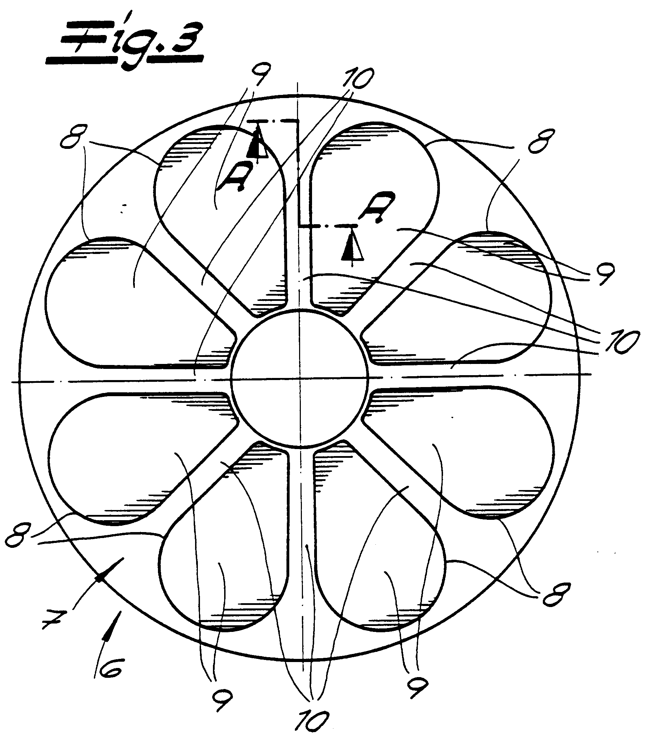

Im Rahmen der Erfindung können die Abdeckbodenfüllstücke 9 grundsätzlich eine sehr unterschiedliche Gestaltung aufweisen, z. B. einen kreisförmigen oder dreieckigen Grundriß aufweisen. Jedenfalls empfiehlt es sich, die Abdeckbodenausnehmungen 8 und die Abdeckbodenfüllstücke 9 kreissymmetrisch und/oder radialsymmetrisch auszubilden. In diesem Zusammenhang ist von besonderer Bedeutung, die Ausführungsform nach den Fig. 1 und 2. Man erkennt, daß die Abdeckbodenausnehmungen 8 als Kreisbogenabschnitte einer Breite von über 10 mm ausgeführt sind, daß diese Kreisbogenabschnitte zwischen radial verlaufenden Abdeckbodenstegen 10 angeordnet sind und daß die Abdeckbodenfüllstücke 9 in die Kreisbogenabschnitte 8 eingepaßt sind. Im Ausführungsbeispiel sind vier rechtwinklig zueinander verlaufende Abdeckbodenstege 10 vorgesehen, die von einem kreisförmigen Abdeckbodenzentrum 11 ausgehen. - Es versteht sich, daß bei der beschriebenen Ausführungsform die Abdeckbodenausnehmungen 8 und die Abdeckbodenfüllstücke 9 auch geschlossen kreisförmig umlaufen können.

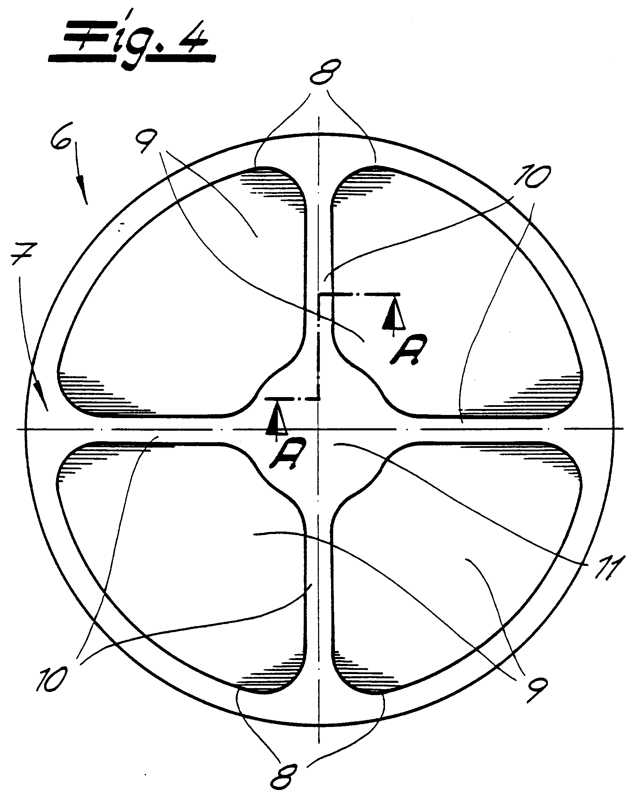

Bei der Ausführungsform nach Fig. 3 sind die Abdeckbodenausnehmungen 8 als Kreissegmente ausgeführt, zwischen denen radial verlaufende Abdeckbodenstege 10 angeordnet sind. Die ebenfalls kreissegmentförmigen Abdeckbodenfüllstücke 9 sind in die Kreissegmente 8 eingepaßt. Dabei sind die Kreissegmente zum Rand der Platinenabdeckung 6 hin halbkreisförmig begrenzt. Die Kreissegmente 8 sind gleich groß.

Es versteht sich, daß die Platinenabdeckung 6, wie bereits erwähnt, als Kapselabdeckung ausgebildet sein kann. Die Blechdicken entsprechen dem Patentanspruch 10. Die Verbindung zwischen dem Behälterboden 4, der Platine 5 und der Platinenabdeckung 6 kann als eine intermetallische Verbindung ausgeführt und durch eine Preßschweißung hergestellt sein. Insoweit empfiehlt sich die Ausführungsform nach DE 41 25 115 C2. Es besteht aber auch die Möglichkeit, die beschriebenen Bauteile mit Hilfe einer Lötverbindung miteinander zu vereinigen. Die beschriebene Bombagestabilität läßt sich stets einrichten.

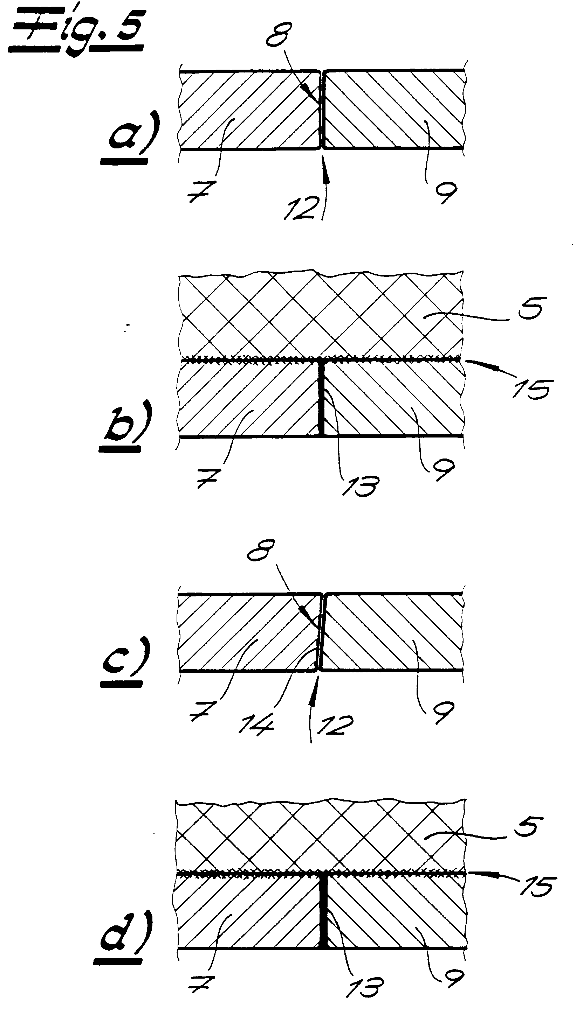

In den Teilfiguren der Fig. 5, die einen stark vergrößerten Schnitt darstellen, erkennt man jeweils ein Teilstück eines Abdeckbodens 7 und ein Teilstück eines Abdeckbodenfüllstückes 9. In den Teilfiguren a) und c) ist der Passungsspalt 12 verdeutlicht, der nach Einpassen der Abdeckbodenfüllstücke 9 in die Abdeckbodenausnehmungen 8 entsteht. In den Teilfiguren b) und d) ist der Passungsspalt 12 durch eine Laserstrahlschweißnaht 13 geschlossen. Die Teilfigur c) zeigt die Ausführungsform mit leicht konischem Schnittrand 14 an dem Abdeckboden 7 bzw. an dem Abdeckbodenfüllstück 9. Die Teilfigur d) zeigt den Gegenstand nach Teilfigur c) nach Herstellung der Laserstrahlschweißnaht 13. In den Teilfiguren b) und d) ist auch die intermetallische Verbindung mit der Platine 5 angedeutet.

## Patentansprüche

1. Topfförmiges Gar- und/oder Kochgerät, welches für eine bodenseitige Zuführung von Wärmeenergie durch Wärmeleitung oder elektromagnetische Induktion eingerichtet ist, - mit einem im Grundriß runden Aufnahmebehälter (2) für das Gar- oder Kochgut mit Behältermantel (3) und Behälterboden (4) aus austenitischem Stahlblech, einer metallisch mit dem Behälterboden (4) verbundenen Platine (5) aus einem gut wärmeleitenden metallischen Werkstoff und einer metallischen Platinenabdeckung (6), die einen kreisscheibenförmigen Abdeckboden (7) mit einer Mehrzahl von über den Umfang verteilten, mit einem anderen metallischen Werkstoff verfüllten Abdeckbodenausnehmungen (8) aufweist, **dadurch gekennzeichnet**, daß in die Abdeckbodenausnehmungen (8) Abdeckbodenfüllstücke (9) aus Stahlblech mit Passungsspalt (12) eingepaßt sind, daß der Passungsspalt (12) durch eine Laserstrahlschweißnaht (13) geschlossen ist und daß der Abdeckboden (7) sowie die Abdeckbodenfüllstücke auch im Bereich der Laserstrahlschweißnaht (13) metallisch mit der Platine (5) verbunden sind.

2. Topförmiges Gar- und/oder Kochgerät (1) nach Anspruch 1, dadurch gekennzeichnet, daß die Laserstrahlschweißnaht (13) hauptsächlich aus dem Werkstoff der Platinenabdeckung (6) gebildet ist.

3. Topfförmiges Gar- und/oder Kochgerät (1) nach Anspruch 1, dadurch gekennzeichnet, daß die Laserstrahlschweißnaht (13) hauptsächlich aus dem Werkstoff der Abdeckbodenfüllstücke (9) gebildet ist.

4. Topfförmiges Gar- und/oder Kochgerät (1) nach Anspruch 1, dadurch gekennzeichnet, daß die Laserstrahlschweißnaht (13) sowohl aus dem Werkstoff der Platinenabdeckung (6), als auch aus dem Werkstoff des Abdeckbodens (7), Werkstoffverhältnis etwa 1:1, gebildet ist.

5. Topfförmiges Gar- und/oder Kochgerät (1) nach Anspruch 1, dadurch gekennzeichnet, daß die Laserstrahlschweißnaht (13) aus einem zugeführten Schweißwerkstoff gebildet ist.

6. Verfahren zur Herstellung eines topfförmigen Gar-und/oder Kochgerätes (1), wobei in einem Abdeckboden (7) einer Platinenabdeckung (6) Abdeckbodenausnehmungen eingebracht und mit Metall verfüllt werden, dadurch gekennzeichnet, daß Abdeckbodenfüllstücke (9) mit vorgegebener Passung aus Stahlblech ausgeschnitten und mit vorgegebenem Passungsspalt in die Abdeckbodenausnehmungen (8) eingepaßt werden und daß die Passungsspalte (12) im kalten Zustand des Abdeckbodens (7) und der Abdeckbodenfüllstücke (9) durch Laserstrahlschweißnähte (13) geschlossen werden, die mit Hilfe eines focussierten, rechnergestützt geführten Laserstrahls ausreichender Energie und einer Breite, die größer ist als die Spaltdicke der Passungsspalte (12), erzeugt werden.

7. Verfahren zur Herstellung eines topfförmigen Gar- und/oder Kochgerätes (1), wobei in einem Abdeckboden (7) einer Platinenabdeckung (6) Abdeckbodenausnehmungen (8) eingebracht und mit Metall verfüllt werden, dadurch gekennzeichnet, daß Abdeckbodenfüllstücke (9) mit vorgegebener Passung aus Stahlblech ausgeschnitten und mit vorgegebenem Passungsspalt (12) in die Abdeckbodenausnehmungen (8) eingepaßt werden, daß die eingepaßten Abdeckbodenfüllstücke (9) durch Bestrahlung erwärmt werden und durch Wärmedehnung ein Anpreßzustand erzeugt wird, bei dem die Schnittflächen der Abdeckbodenfüllstücke (9) und die Schnittflächen der Abdeckbodenausnehmungen (8) gegeneinander gepreßt werden, und daß im Anpreßzustand der Abdeckboden (7) und die Abdeckbodenfüllstücke (9) längs der Schnittflächen durch Laserstrahlschweißnähte (13) miteinander verbunden werden, die mit Hilfe eines rechnergestützt geführten Laserstrahls ausreichender Breite erzeugt werden.

8. Verfahren zur Herstellung eines topfförmigen Gar- und/oder Kochgerätes (1), wobei in einem Abdeckboden (7) einer Platinenabdeckung (6) Abdeckbodenausnehmungen (8) eingebracht und mit Metall verfüllt werden, dadurch gekennzeichnet, daß die Abdeckbodenausnehmungen (8) mit konischem Schnittrand erzeugt werden und Abdeckbodenfüllstücke (9) mit vorgegebener Passung und zum Schnittrand der Abdeckbodenausnehmungen (7) komplementärkonischem Schnittrand (14) aus Stahlblech ausgeschnitten werden, daß die Abdeckbodenfüllstücke (9) in die Abdeckbodenausnehmungen (8) Konusfläche gegen Konusfläche mit Konusüberlappung eingesetzt werden, wobei im eingesetzten Zustand der Abdeckbodenfüllstücke (9) ein freier Laserstrahldurchfall blockiert ist, und daß im kalten Zustand des Abdeckbodens (7) und der Abdeckbodenfüllstücke (9) Laserstrahlschweißnähte (13) hergestellt werden, die mit Hilfe eines auf den Bereich der Konusüberlappung focussierten, rechnergestützt geführten Laserstrahls erzeugt werden.

9. Verfahren nach Anspruch 8, dadurch gekennzeichnet, daß die Konusflächen der Konusüberlappung bei der Herstellung der Laserschweißnähte (13) aufeinander gepreßt werden.

10. Verfahren nach einem der Ansprüche 6 bis 9, dadurch gekennzeichnet, daß die Abdeckbodenausnehmungen (8) und Abdeckbodenfüllstücke (9) mit den Hilfsmitteln des Laserstrahlschneidens aus dem Stahlblech der Platinenabdeckung (6) und aus dem Stahlblech für die Abdeckbodenfüllstücke (9) rechnergestützt ausgeschnitten werden.

## Claims

1. A pot-shaped cooking and/or boiling utensil which is designed for the supply of thermal energy at the base by thermal conduction or electromagnetic induction, - having a receiving vessel (2), which is round in horizontal projection, for the material to be cooked or boiled, comprising a vessel sidewall (3) and a vessel base (4) made of austenitic sheet steel, a bottom plate (5) which is metallically bonded to the vessel base (4) and which is made of a metallic material of good thermal conductivity, and a metallic bottom plate covering (6) which has a covering base (7) in the form of a circular disc, with a plurality of circularly symmetrical covering base recesses (8) which are distributed over its periphery and which are filled with a different metallic material, characterised in that covering base filling pieces (9) made of sheet steel are fitted into the covering base recesses (8) with a fitting gap (12), that the fitting gap (12) is closed by a laser beam weld seam (13), and that the covering base (7) as well as the covering base filling pieces are also metallically bonded to the bottom plate (5) in the region of the laser weld seam (13).

2. A pot-shaped cooking and/or boiling utensil (1) according to claim 1, characterised in that the laser beam weld seam (13) is formed mainly from the material of the bottom plate covering (6).

3. A pot-shaped cooking and/or boiling utensil (1) according to claim 1, characterised in that the laser beam weld seam (13) is formed mainly from the material of the covering base filling pieces (9).

4. A pot-shaped cooking and/or boiling utensil (1) according to claim 1, characterised in that the laser beam weld seam (13) is formed both from the material of the bottom plate covering (6) and from the material of the covering base (7), in a ratio of materials of about 1 : 1.

5. A pot-shaped cooking and/or boiling utensil (1) according to claim 1, characterised in that the laser beam weld seam (13) is formed from a weld material which is supplied.

6. A method of producing a pot-shaped cooking and/or boiling utensil (1), wherein covering base recesses are provided in a covering base (7) of a bottom plate covering (6) and are filled with metal, characterised in that covering base filling pieces (9) of a predetermined fit are cut from sheet steel and are fitted into the covering base recesses (8) with a predetermined fitting gap, and that the fitting gaps (12) are closed, with the covering base (7) and the covering base filling pieces (9) in a cold state, by laser beam weld seams (13) which are produced by means of a focused laser beam of sufficient energy, which is guided by computer-aided means and which has a width which is greater than the gap thickness of the fitting gaps (12).

7. A method of producing a pot-shaped cooking and/or boiling utensil (1), wherein covering base recesses (8) are provided in a covering base (7) of a bottom plate covering (6) and are filled with metal, characterised in that covering base filling pieces (9) of a predetermined fit are cut from sheet steel and are fitted into the covering base recesses (8) with a predetermined fitting gap (12), and that the fitting gaps (12), that the fitted covering base filling pieces (9) are heated by irradiation and a contact pressure state is produced by thermal expansion in which the cut edges of the covering base filling pieces (9) and the cut edges of the covering base recesses (8) are pressed against each other, and that the covering base (7) and the covering base filling pieces (9) are joined to each other along their cut edges in the contact pressure state by laser beam weld seams (13) which are produced by means of a laser beam of sufficient width which is guided by computer-aided means.

8. A method of producing a pot-shaped cooking and/or boiling utensil (1), wherein covering base recesses (8) are provided in a covering base (7) of a bottom plate covering (6) and are filled with metal, characterised in that covering base recesses (8) are produced with a conical cut edge, and covering base filling pieces (9) of a predetermined fit, and with a cut edge (14) which is complementary to the cut edge of the covering base recesses (8), are cut from sheet steel, that the covering base filling pieces (9) are inserted in the covering base recesses (8), conical face against conical face and with cone overlap, wherein free transmission of the laser beam is blocked when the covering base filling pieces (9) are in their inserted state and laser beam weld seams are produced with the covering base (7) and the covering base filling pieces (9) in a cold state, which laser beam weld seams are produced by means of a laser beam which is focused on the region of cone overlap and which is guided by computer-aided means.

9. A method according to claim 8, characterised in that the conical faces of the cone overlap are pressed on to each other during the production of the laser weld seams (13).

10. A method according to any one of claims 6 to 9, characterised in that the covering base recesses (8) and the covering base filling pieces (9) are cut, by computer-aided means and using the resources of laser beam cutting, from the sheet steel of the bottom plate cover (6) and from the sheet steel for the covering base filling pieces (9).

## Revendications

1. Récipient de cuisson et/ou rôtissage en forme de pot, qui est aménagé pour un apport d'énergie thermique côté fond, par conduction thermique ou induction électromagnétique, comportant un récipient de réception (2), de contour rond, pour le produit à cuire ou à rôtir avec enveloppe de récipient (3) et fond de récipient (4) en tôle d'acier austénitique, comportant une platine (5) reliée métalliquement au fond (4) du récipient, en un matériau métallique bon conducteur de la chaleur ainsi qu'une couverture de platine (6) métallique qui présente un fond de couverture (7) en forme de disque circulaire avec une pluralité d'évidements (8) du fond de couverture répartis sur le pourtour, remplis d'un autre matériau métallique, caractérisé en ce que dans les évidements (8) du fond de couverture sont ajustées des pièces de garnissage (9) du fond de couverture en tôle d'acier avec fente d'ajustement (12), en ce que la fente d'ajustement (12) est fermée par un cordon de soudure à rayon laser (13) et en ce que le fond de couverture (7) ainsi que les pièces de garnissage du fond de couverture sont aussi reliées métalliquement à la platine (5) dans la zone du cordon de soudure au rayon laser (13).

2. Récipient de cuisson et/ou rôtissage (1) en forme de pot selon la revendication 1, caractérisé en ce que le cordon de soudure au rayon laser (13) est principalement constitué du matériau de la couverture de platine (6).

3. Récipient de cuisson et/ou rôtissage (1) en forme de pot selon la revendication 1, caractérisé en ce que le cordon de soudure au rayon laser (13) est essentiellement constitué du matériau des pièces de garnissage (9) du fond de couverture.

4. Récipient de cuisson et/ou rôtissage (1) en forme de pot selon la revendication 1, caractérisé en ce que le cordon de soudure au rayon laser (13) est réalisé aussi bien dans le matériau de la couverture de platine (6) que dans le matériau du fond de couverture (7) dans un rapport des matériaux d'environ 1 à 1.

5. Récipient de cuisson et/ou rôtissage (1) en forme de pot selon la revendication 1, caractérisé en ce que le cordon de soudure au rayon laser (13) est constitué d'un matériau de soudure d'apport.

6. Procédé de fabrication d'un récipient de cuisson et/ou rôtissage (1) en forme de pot, des évidements du fond de couverture étant pratiqués dans un fond de couverture (7) d'une couverture de platine (6) et étant remplis de métal, caractérisé en ce que des pièces de garnissage (9) du fond de couverture sont découpées avec un ajustement donné, dans de la tôle d'acier et sont ajustées avec fente d'ajustement donnée dans les évidements (8) du fond de couverture et en ce que les fentes d'ajustement (12) sont fermées à l'état froid du fond de couverture (7) et des pièces de garnissage (9) du fond de couverture, par des cordons de soudure au rayon laser (13), qui sont produits à l'aide d'un rayon laser focalisé guidé de manière assistée par ordinateur, d'une énergie suffisante et d'une largeur qui est supérieure à l'épaisseur des fentes d'ajustement (12).

7. Procédé de fabrication d'un récipient de cuisson et/ou rôtissage (1) en forme de pot, des évidements du fond de couverture étant pratiqués dans un fond de couverture (7) d'une couverture de platine (6) et étant remplis de métal, caractérisé en ce que des pièces de garnissage (9) du fond de couverture sont découpées avec un ajustement donné, dans de la tôle d'acier et sont ajustées avec fente d'ajustement (12) donnée dans les évidements (8) du fond de couverture, en ce que les pièces de garnissage (9) ajustées du fond de couverture sont chauffées par rayonnement, et par dilatation thermique il est produit un état de pression dans lequel les surfaces de coupe des pièces de garnissage (9) du fond de couverture et les surfaces de coupe des évidements (8) du fond de couverture sont pressées les unes contre les autres, et en ce que dans l'état pressé le fond de couverture (7) et les pièces de garnissage (9) du fond de couverture sont reliés entre eux par des cordons de soudure au rayon laser (13), qui sont produits à l'aide d'un rayon laser de largeur suffisante, guidé de manière assistée par ordinateur.

8. Procédé de fabrication d'un récipient de cuisson et/ou rôtissage (1) en forme de pot, des évidements du fond de couverture étant pratiqués dans un fond de couverture (7) d'une couverture de platine (6) et étant remplis de métal, caractérisé en ce que les évidements 8 du fond de couverture sont produits avec un bord de coupe conique et des pièces de garnissage (9) du fond de couverture sont découpées dans de la tôle d'acier avec un ajustement donné et avec un bord de coupe (14) conique complémentaire du bord de coupe des évidements (7) du fond de couverture, en ce que les pièces de garnissage (9) du fond de couverture sont insérées dans les évidements (8) du fond de couverture, surface contre surface de cône avec recouvrement des cônes à l'état inséré des pièces de garnissage (9) du fond de couverture, une libre incidence du rayon laser étant bloquée, et en ce qu'à l'état froid du fond de couverture (7) et des pièces de garnissage (9) du fond de couverture, des cordons de soudure au rayon laser (13) sont réalisés, qui sont produits à l'aide d'un rayon laser guidé de manière assistée par ordinateur, focalisé sur la zone du recouvrement des cônes.

9. Procédé selon la revendication 8, caractérisé en ce que les surfaces de cône du recouvrement des cônes sont pressées l'une sur l'autre lors de la réalisation des cordons de soudure au laser (13).

10. Procédé selon l'une des revendications 6 à 9, caractérisé en ce que les évidements (8) du fond de couverture et les pièces de garnissage (9) du fond de couverture sont découpés, de manière assistée par ordinateur avec les moyens auxiliaires de la coupe à rayon laser, dans la tôle d'acier de la couverture de platine (6) et dans la tôle d'acier pour les pièces de garnissage (9) du fond de couverture.
